# EUROPEAN PATENT APPLICATION

(11) **EP 1 569 087 A2**
(43) Date of publication of application: **31.08.2005**
(21) Application number: 05250775.3
(22) Date of filing: 10.02.2005
(51) Int. Cl.: G06F 3/12

(54) **Data processing apparatus, data processing method, program for implementing the method, and storage medium storing the program**

(30) Priority: 17.02.2004 JP 2004040479; 19.03.2004 JP 2004081174
(71) Applicant: CANON KABUSHIKI KAISHA, Ohta-ku, Tokyo (JP)
(72) Inventor: Iwasaki, Shingo, Ohta-ku Tokyo (JP)
(74) Representative: Beresford, Keith Denis Lewis

(57) **Abstract**

A data processing apparatus which is capable of automatically calculating layout information suitable for various materials and outputting a document interpretable by a driver of a printing apparatus. An input section 103 inputs data. A data analysis section 107 analyzes the input data. A layout processing section 108 generates layout information on the data based on a result of the analysis by the data analysis section. The layout processing section 108 lays out the data based on the generated layout information and converts the data laid out into a document printable by the printing apparatus.

## Description

### BACKGROUND OF THE INVENTION

### Field of the Invention

The present invention relates to a data processing apparatus and a data processing method that carry out layout processing on input data, a program for implementing the method, and a storage medium storing the program.

### Description of the Related Art

Conventionally, in laying out a document to be printed by a printer, image data and text data for the document are handled as separate pieces of data constituting the layout (hereinafter referred to as materials or data materials). When these materials are to be output as a document interpretable by a driver of the printer, a person who generates the materials does not only prepare the materials but also considers a layout suitable for the materials to manually perform layout processing or manually generate a template for outputting the materials in a desired predetermined layout format (see e.g. Japanese Laid-Open Patent Publication (Kokai) No. H11-353466).

Further, in laying out image data and text data (hereinafter referred to as material data) in a layout area for contents generated using a markup language typified by HTML (HyperText Markup Language) or XML (extensible Markup Language), to automatically lay out material data defining rectangular patterns (hereinafter referred to as "rectangular material data") in a rectangular layout area, there is conventionally employed a method of laying out material data for output, using a template, such as a XSLT (XML Stylesheet Language Transform) stylesheet. Furthermore, a combination of desired ones of the HTML technique, the XHTML (extensible HyperText Markup Language) technique, the XSLT technique, the SVG (Scalable Vector Graphics) technique, and so forth can be used for achieving automatic layout of rectangular material data in a rectangular layout area.

However, no technique has been developed for automatically laying out rectangular material data in a layout area having a shape other than a rectangular one. Therefore, in achieving this kind of layout, an operator has to visually compare and process the material data by his/her eyes for manual adjustment and thereby lay out the material data at optimal locations within the layout area. In short, when rectangular material data are laid out not in a rectangular layout area, but in a circular layout area, for example, an operator, i.e. a human being carries out a manual layout operation.

Further, as one of general layout techniques, such as zoom-in and zoom-out, used by printing apparatuses, there has been proposed a technique of easily adding a zoom-out printout function of laying out a plurality of original pages in one page to a printer which prints each page by band-by-band printing processing (see e.g. Japanese Laid-Open Patent Publication (Kokai) No. H09-26865.)

In the conventional data processing apparatus described hereinabove, however, a person who generates materials has to manually carry out layout processing such that the driver of the printing apparatus can interpret the layout of the materials, which imposes a very large burden on the person and therefore causes an increase in labor costs.

Further, the method of generating a template for outputting materials in a predetermined layout format, and then performing layout processing using the template to thereby output the materials as a document interpretable by the driver of the printing apparatus has the inconvenience that the materials can only be output in a limited number of predetermined patterns, which makes it impossible to obtain dynamic layout results adapted e.g. to the sizes of various input materials.

Furthermore, when rectangular material data are laid out in a layout area having a shape other than a rectangular one by a human manual operation, as described hereinabove, it is necessary to lay out material data in layout areas different in shape such that the material data can be fit into the respective associated layout areas, which necessitates technical labor and working time and furthermore causes an increase in labor costs.

### SUMMARY OF THE INVENTION

It is a first object of the present invention to provide a data processing apparatus and a data processing method which are capable of automatically calculating layout information suitable for various materials and outputting a document interpretable by a driver of a printing apparatus, a program for implementing the method, and a storage medium storing the program.

It is a second object of the present invention to provide a data processing apparatus and a data processing method which are capable of automatically laying out a plurality of material data in respective layout areas different in shape, a program for implementing the method, and a storage medium storing the program.

To attain the above first object, in a first aspect of the present invention, there is provided a data processing apparatus that is connectable to at least one printing apparatus and that is capable of performing layout processing on input data, comprising an input device that inputs data, an analysis device that analyzes the input data, a generation device that generates layout information on the data based on a result of the analysis by the analysis device, and a converting device that lays out the data based on the generated layout information and converts the data laid out into a document printable by the printing apparatus.

With the configuration of the first aspect of the present invention, input data is analyzed, layout information on the data is generated based on the result of the analysis, and the data is laid out based on the generated layout information. Further, the data laid out is converted into a document printable by a printing apparatus. As a result, it is possible to automatically calculate layout information suitable for various materials (data), thereby outputting a document interpretable by a driver of the printing apparatus. This makes it possible to reduce a burden on the data material-generating side and cut down labor costs. Further, the data material-generating side can concentrate on generation of data materials without being conscious of layout of the materials themselves, which contributes to improvement of the quality of the data materials. Furthermore, the layout processing side can construct automatic layout functions for processing various data materials, thereby establishing a brand-new service model in which the services of data material generation and layout processing are provided separately.

Preferably, the data processing apparatus comprises an output device that outputs the document obtained by the conversion to the printing apparatus.

Preferably, the converting device includes a preparation device that prepares a template based on the generated layout information, and the converting device lays out the data using the prepared template.

With this configuration, data layout can be performed efficiently.

Preferably, the generation device performs at least one of comparison, selection, and processing of the data to thereby generate the layout information.

Preferably, the input data includes XML data, and the analysis device analyzes a tag structure of the XML data.

Preferably, the analysis device analyzes data of comments.

Preferably, the analysis device analyzes data of images.

Preferably, the generation device generates the layout information based on a sequence of pieces of data described in the input data.

With this configuration, data can be arranged in order of description.

Preferably, the generation device generates the layout information based on an order of priorities described in the data.

With this configuration, data can be arranged in order of decreasing priority.

Preferably, the data processing apparatus comprises a discrimination device that discriminates a type of each of pieces of data composing the input data, a storage device that stores the pieces of data in a manner distributed based on the discriminated types of the pieces of data, and an extraction device that extracts the stored data, and the generation device generates layout information on the extracted data.

With this arrangement, it is possible to extract data efficiently according to the types of data.

Preferably, the storage device generates an association table showing association between the pieces of data and storage locations where the pieces of data are stored, and the extraction device extracts the stored data using the association table.

With this configuration, it is possible to extract data efficiently according to the types of data.

To attain the above second object, in a second aspect of the present invention, there is provided a data processing apparatus comprising a receiving device that receives material data to be laid out, and layout area data defining a layout area, an analysis device that analyzes at least one of a type and a shape of each of the material data received by the receiving device, a determining device that determines whether the layout area defined by the layout area data received by the receiving device is rectangular or non-rectangular, and a layout device that is operable when the determining device determines that the layout area is rectangular, to perform layout processing with reference to a result of the analysis by the analysis device, in a manner such that the material data are accommodated in the rectangular layout area, and operable when the determining device determines that the layout area is non-rectangular, to perform layout processing with reference to the result of the analysis by the analysis device, in a manner such that the material data are laid out in the non-rectangular layout area according to an order of priorities of the material data.

With the configuration of the second aspect of the present invention, at least one of the type and shape of each of the received material data is analyzed, and it is determined whether or not the shape of a layout area defined by the received layout area data is rectangular. Then, if the shape of the layout area is determined to be rectangular, the layout processing is performed with reference to the analysis result such that the material data are accommodated in the rectangular layout area, whereas if the shape is determined to be non-rectangular, the layout processing is performed with reference to the analysis result such that the material data are accommodated in the non-rectangular layout area according to an order of priorities of the material data. As a result, it is possible to automatically lay out the material data in respective layout areas different in shape.

Preferably, the data processing apparatus further comprises a data compiling device that compiles the material data into a data file described in a markup language, based on the result of the analysis by the analysis device, and the layout device performs layout processing using the data file generated by the data compiling device.

Preferably, when the material data include image data, the data compiling device describes information specifying a storage location where the image data is stored, in the data file.

Preferably, the markup language is XML.

Preferably, the data processing apparatus further comprises a converting device that converts print data obtained by the layout processing performed by the layout device into a data format that can be processed by a destination printing apparatus.

Preferably, the receiving device receives the material data and the layout area data from a user terminal requesting layout processing via a network.

To attain the above first object, in a third aspect of the present invention, there is provided a data processing method of performing layout processing on input data using a computer connected to at least one printing apparatus, comprising an input step of inputting data, an analysis step of analyzing the input data, a generating step of generating layout information on the data based on a result of the analysis in the analysis step, and a converting step of laying out the data based on the generated layout information and converting the data laid out into a document printable by the printing apparatus.

With this configuration of the third aspect of the present invention, it is possible to provide the same advantageous effects as provided by the data processing apparatus according to the first aspect of the present invention.

To attain the above second object, in a fourth aspect of the present invention, there is provided a data processing method executed using a data processing apparatus, comprising a receiving step of receiving material data to be laid out, and layout area data defining a layout area, an analysis step of analyzing at least one of a type and a shape of each of the material data received in the receiving step, a determining step of determining whether the layout area defined by the layout area data received in the receiving step is rectangular or non-rectangular, and a layout step of performing layout processing with reference to a result of the analysis in the analysis step, in a manner such that the material data are accommodated in the rectangular layout area, when it is determined in the determining step that the layout area is rectangular, and performing layout processing with reference to the result of the analysis in the analysis step, in a manner such that the material data are laid out in the non-rectangular layout area according to an order of priorities of the material data, when it is determined in the determining step that the layout area is non-rectangular.

With this configuration of the fourth aspect of the present invention, it is possible to provide the same advantageous effects as provided by the data processing apparatus according to the second aspect of the present invention.

Preferably, the data processing method further comprises a data compiling step of compiling the material data into a data file described in a markup language based on the result of the analysis in the analysis step, and the layout step comprises performing layout processing using the data file generated in the data compiling step.

Preferably, the data compiling step comprises describing information specifying a storage location where the image data is stored, in the data file, when the material data include image data.

Preferably, the markup language is XML.

Preferably, the data processing method further comprises a conversion step of converting print data obtained by the layout processing performed in the layout step into a data format that can be processed by a destination printing apparatus.

Preferably, the receiving step comprises receiving the material data and the layout area data from a user terminal requesting layout processing via a network.

To attain the above first object, in a fifth aspect of the present invention, there is provided a program for executing a data processing method of performing layout processing on input data using a computer connected to at least one printing apparatus, comprising an input module for inputting data, an analysis module for analyzing the input data, a generating module for generating layout information on the data based on a result of the analysis by the analysis module, and a converting module for laying out the data based on the generated layout information and converting the data laid out into a document printable by the printing apparatus.

With this configuration of the fifth aspect of the present invention, it is possible to provide the same advantageous effects as provided by the data processing apparatus according to the first aspect of the present invention.

To attain the above second object, in a sixth aspect of the present invention, there is provided a program for executing a data processing method, comprising a receiving module for receiving material data to be laid out, and layout area data defining a layout area, an analysis module for analyzing at least one of a type and a shape of each of the material data received by the receiving module, a determining module for determining whether the layout area defined by the layout area data received by the receiving module is rectangular or non-rectangular, and a layout module for performing layout processing with reference to a result of the analysis by the analysis module, in a manner such that the material data are accommodated in the rectangular layout area, when it is determined by the determining module that the layout area is rectangular, and performing layout processing with reference to the result of the analysis by the analysis module, in a manner such that the material data are laid out in the non-rectangular layout area according to an order of priorities of the material data, when it is determined by the determining module that the layout area is non-rectangular.

With this configuration of the sixth aspect of the present invention, it is possible to provide the same advantageous effects as provided by the data processing apparatus according to the second aspect of the present invention.

To attain the above first object, in a seventh aspect of the present invention, there is provided a computer-readable storage medium storing a program for executing a data processing method of performing layout processing on input data using a computer connected to at least one printing apparatus, the program comprising an input module for inputting data, an analysis module for analyzing the input data, a generating module for generating layout information on the data based on a result of the analysis by the analysis module, and a converting module for laying out the data based on the generated layout information and converting the data laid out into a document printable by the printing apparatus.

With this configuration of the seventh aspect of the present invention, it is possible to provide the same advantageous effects as provided by the data processing apparatus according to the first aspect of the present invention.

To attain the above second object, in an eighth aspect of the present invention, there is provided a computer-readable storage medium storing a program for executing a data processing method, the program comprising a receiving module for receiving material data to be laid out, and layout area data defining a layout area, an analysis module for analyzing at least one of a type and a shape of each of the material data received by the receiving module, a determining module for determining whether the layout area defined by the layout area data received by the receiving module is rectangular or non-rectangular, and a layout module for performing layout processing with reference to a result of the analysis by the analysis module, in a manner such that the material data are accommodated in the rectangular layout area, when it is determined by the determining module that the layout area is rectangular, and performing layout processing with reference to the result of the analysis by the analysis module, in a manner such that the material data are laid out in the non-rectangular layout area according to an order of priorities of the material data, when it is determined by the determining module that the layout area is non-rectangular.

With this configuration of the eighth aspect of the present invention, it is possible to provide the same advantageous effects as provided by the data processing apparatus according to the second aspect of the present invention.

The above and other objects, features, and advantages of the present invention will become more apparent from the following detailed descriptions taken in conjunction with the accompanying drawings.

### BRIEF DESCRIPTION OF THE DRAWINGS

FIG. 1 is a block diagram showing the configuration of a layout output apparatus as a data processing apparatus according to a first embodiment of the present invention;
FIG. 2 is a block diagram showing the hardware configuration of a general-purpose computer which implements the layout output apparatus;
FIG. 3 is a view showing a data material provided from a data material group 101;
FIG. 4 is a functional block diagram showing the configuration of a data material-distributing section 104;
FIG. 5 is a functional block diagram showing the configuration of a data extracting section 106;
FIG. 6 is a functional block diagram showing the configuration of a data analysis section 107;
FIGS. 7A and 7B are views showing data layout areas;
FIG. 8 is a functional block diagram showing the configuration of a layout processing section 108;
FIG. 9 is a flowchart of a layout output process;
FIG. 10 is a view showing a data material provided from a data material group 101 installed in a layout output apparatus as a data processing apparatus according to a second embodiment of the present invention;
FIG. 11 is a view showing a data material provided from a data material group 101 installed in a layout output apparatus as a data processing apparatus according to a third embodiment of the present invention;
FIG. 12 is a view showing a data material provided from a data material group 101 installed in a layout output apparatus as a data processing apparatus according to a fourth embodiment of the present invention;
FIG. 13 is a diagram schematically showing the configuration of a system including a PC and a server;
FIG. 14 is a diagram showing the internal configuration of a layout output apparatus 100 (1111) as a data processing apparatus according to a fifth embodiment of the present invention;
FIG. 15 is a flowchart showing details of an analysis process executed by a data analysis section 107 appearing in FIG. 14;
FIG. 16 is a flowchart showing details of a compilation process executed in a data compiling section 1207 appearing in FIG. 14;
FIG. 17 is a view illustrating an example of association between XML data and image data in a step S1403;
FIG. 18 is a flowchart showing details of a layout process executed by a layout processing section 108 appearing in FIG. 14;
FIGS. 19A to 19C are views useful in explaining processing executed in a step S1604 when a layout area has a rectangular shape; and
FIGS. 20A to 20C are views useful in explaining processing executed in a step S1604 when the layout area has a shape (doughnut shape) other than a rectangular one.

### DETAILED DESCRIPTION OF THE PREFERRED EMBODIMENTS

The present invention will now be described in detail with reference to the drawings showing preferred embodiments thereof. In the drawings, elements and parts which are identical throughout the views are designated by identical reference numeral, and duplicate description thereof is omitted.

A data processing apparatus, a data processing method, a program for implementing the method, and a storage medium storing the program according to the present invention will be described with reference to the drawings. The data processing apparatus is applied to a layout output apparatus that distributes printed matter (documents) to a plurality of printing apparatuses (printing apparatus group) via a network such as the Internet.

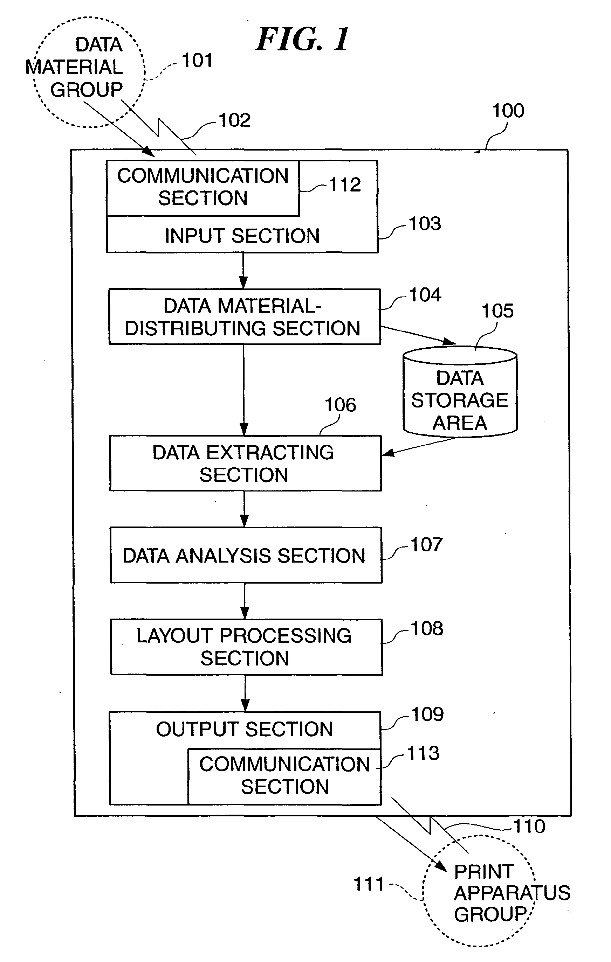

FIG. 1 is a block diagram showing the configuration of a layout output apparatus as a data processing apparatus according to a first embodiment of the present invention. When a data material is provided from a data material group 101 via a communication line 102, the layout output apparatus 100 automatically executes a layout process to output a document to the printing apparatus group 111 via a communication line 110. From the data material group 101, data in various data formats are provided to the layout output apparatus 100. The data material group 101 is stored e.g. in a server connected to the data output apparatus 100 via a network or in a storage medium separate from the network. The printing apparatus group 111 prints out documents received via the communication line 110. The communication lines 102 and 110 include networks, wireless communication terminals, and/or Bluetooth devices, through which data communication is performed.

The layout output apparatus 100 is comprised of an input section 103, a data material-distributing section 104, a data storage area 105, a data extracting section 106, a data analysis section 107, a layout processing section 108, and an output section 109.

The input section 103 includes a communication section 112 that performs communications via the communication line 102, and receives data via the communication section 112. The data material-distributing section 104 discriminates the type of each data received from the input section 103, for example, discriminates between image data and text data, and distributes data materials among associated locations in the data storage area 105 (assigns the locations to the data materials), for storage therein. Further, the data material-distributing section 104 generates an association table in the form of a file which shows the association between the data and the storage locations, and outputs the same to the data extracting section 106. The data of the association table are managed using identification codes (IDs) or the like. The data storage area 105 is comprised of areas for storing respective different types of data.

The data extracting section 106 extracts data from the data stored in the data storage area 105, based on the association table output from the data material-distributing section 104. The data analysis section 107 analyzes the contents of the data extracted from the data storage area 105, and extracts information necessary for preparation of a layout. The layout processing section 108 carries out processing, such as comparison, selection, and processing, based on the information obtained by the data analysis section 107, automatically calculates a layout location suitable for the contents of each data, executes processing for configuring the layout, and converts the laid-out data into a document interpretable by drivers of various printing apparatus.

Similarly to the input section 103, the output section 109 includes a communication section 113 for performing communications via the communication line 110. The output section 109 transmits documents generated by the layout processing section 108 to the printing apparatus group 111 via the communication section 113.

The layout output apparatus 100 as the data processing apparatus according to the present embodiment is implemented by a general-purpose computer (PC), and the above-described sections (modules) are realized by a CPU executing control programs stored in a storage medium.

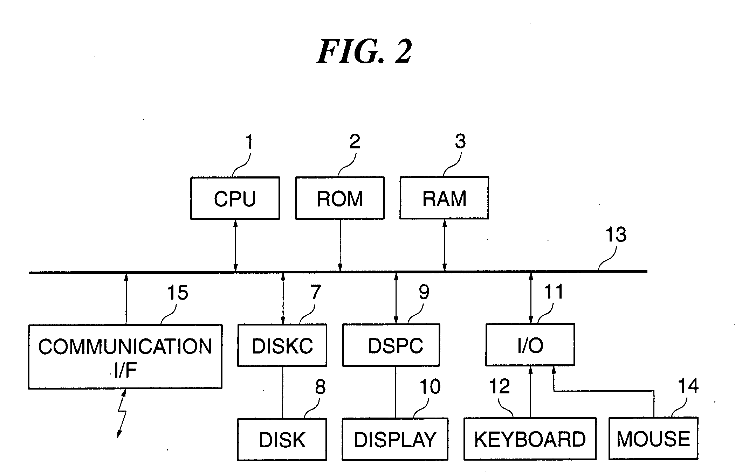

FIG. 2 is a block diagram showing the hardware configuration of the general-purpose computer implementing the layout output apparatus 100. The general-purpose computer is comprised of a CPU 1, a ROM 2, a RAM 3, a disk controller (DISKC) 7, a display controller (DSPC) 9, an I/O interface 11, and a communication interface 15, all of which are interconnected via a bus 13. The CPU 1 sequentially reads control programs from the ROM 2, and controls the overall operation of the layout output apparatus 100. The RAM 3 is used as a storage area for storing input data, a working storage area, and so forth. The disk controller 7 controls a large-capacity hard disk 8. The display controller 9 controls display data to be transmitted to the display 10. A keyboard 12 and a mouse 14 are connected to the I/O interface 11. The communication sections 112 and 113 achieve data communications using the communication interface (I/F) 15.

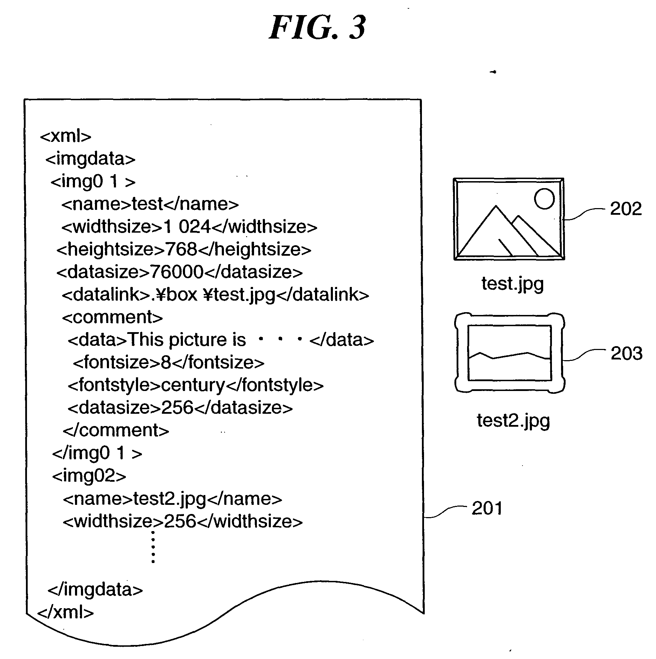

FIG. 3 is a diagram showing a data material provided from the data material group 101. In FIG. 3, reference numeral 201 designates XML data containing information on image data and comment data. The XML data is described using a tag structure which is determined in advance by a data sending side and a data receiving side and thus interpreted in a predetermined manner by the both sides. In the illustrated example, all information is contained in an area defined by <imgdata> tags (i.e. opening tag <imgdata> and closing tag </imgdata>), and in this area information on each image data, such as image size information, data amount information, and information on a data material storage location, are described in an area defined by <img01> tags. Further, comment data is described in an area defined by <comment> tags , as an explanation on the image. Reference numerals 202 and 203 designate image data on which information is described in the XML data 201. In FIG. 3, the image data is in the JPEG image format.

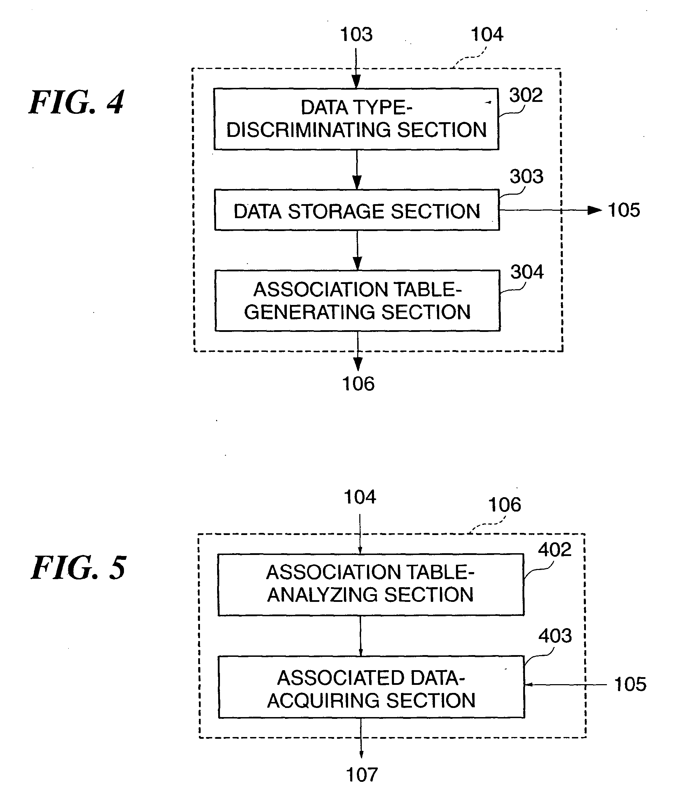

FIG. 4 is a functional block diagram showing the configuration of the data material-distributing section 104. The data material-distributing section 104 is comprised of a data type-discriminating section 302, a data storage section 303, and an association table-generating section 304. The data type-discriminating section 302 performs processing for discriminating the type of each data, i.e. determines whether each data received from the input section 103 is XML data or JPEG image data. The data storage section 303 performs processing for storing data in the data storage area 105, i.e. stores each data in an associated location in the data storage area 105, based on the result of the processing for discriminating the type of data. The association table-generating section 304 generates an association table in the form of a file for use in determining a storage location of each data stored in the data storage area 105, using the identification code (ID) of the data, and delivers the generated table to the data extracting section 106.

FIG. 5 is a functional block diagram showing the configuration of the data extracting section 106. The data extracting section 106 is comprised of an association table-analyzing section 402, and an associated data-acquiring section 403. The association table-analyzing section 402 analyzes the association table in the form of a file delivered from the data material-distributing section 104 to check where in the data storage area 105 each data is stored. The associated data-acquiring section 403 extracts data corresponding to the result of the analysis performed by the association table-analyzing section 402, from the data storage area 105. If the extracted data is XML data, the XML data is delivered to the data analysis section 107.

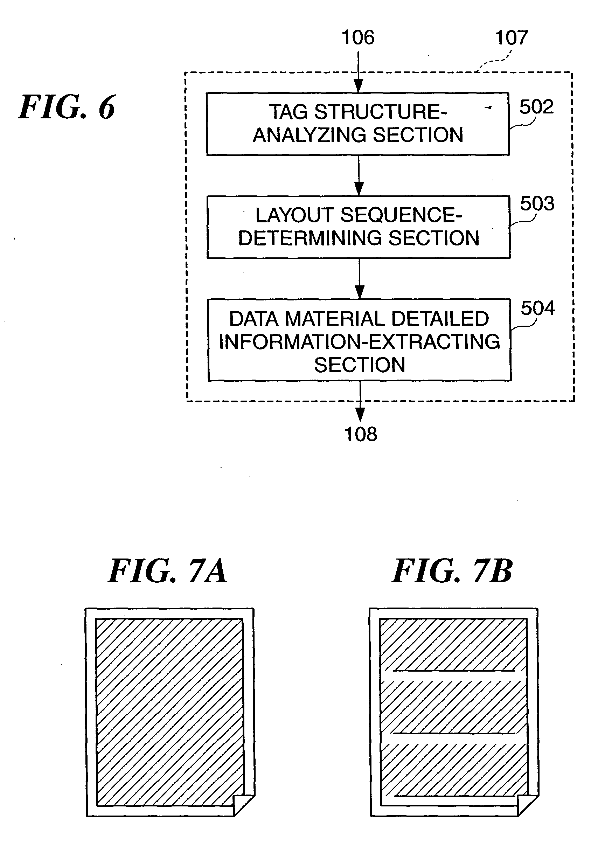

FIG. 6 is a functional block diagram showing the configuration of the data analysis section 107. The data analysis section 107 is comprised of a tag structure-analyzing section 502, a layout sequence-determining section 503, and a data material detailed information-extracting section 504, and checks the nested tag structure of the XML data received from the data extracting section 106.

The tag structure-analyzing section 502 analyzes the tag structure of the XML data. First, the tag structure-analyzing section 502 finds <imgdata> tags, and then finds <img01> tags (see FIG. 3). Further, within the area defined by the <img01> tags, the tag structure-analyzing section 502 finds data related to image data and accompanying comment data within the area defined by the <comment> tags. The layout sequence-determining section 503 determines a sequence in which data are to be laid out, based on the result of the analysis performed by the tag structure-analyzing section 502. First, based on the analysis result, the data analysis section 107 interprets that there is a set of an image and the accompanying comment defined as one material. The <comment> tags are described in an area defined by the <img01> tags, and therefore the data analysis section 107 interprets that the image data is given priority in layout processing, that is, the image data is laid out first. The data material detailed information-extracting section 504 extracts the information, including the size information, of the image data as well as the data obtained by the layout sequence-determining section 503.

FIGS. 7A and 7B are diagrams showing data layout areas. FIG. 7A shows the case where the entire area is designated as a data layout area (hatched area). In this case, each of input data is arranged at an associated location in the entire area in a manner suited to the data. FIG. 7B shows the case where column setting of data layout areas is designated for the entire area. In this case, execution of layout processing based on the column setting is prescribed, and the size of each column is dynamically changed according to information on data size etc.

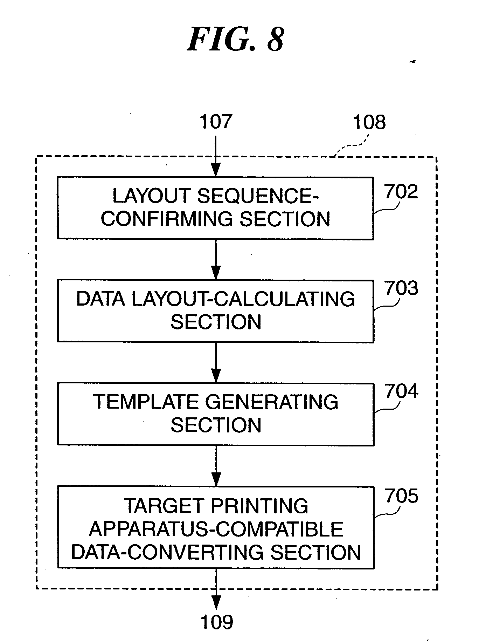

FIG. 8 is a functional block diagram showing the configuration of the layout processing section 108. The layout processing section 108 is comprised of a layout sequence-confirming section 702, a data layout-calculating section 703, a template generating section 704, and a target printing apparatus-compatible data-converting section 705.

The layout sequence-confirming section 702 confirms information including the sequence in which data are to be laid out, based on the data received from the data analysis section 107. The data layout-calculating section 703 performs calculation and comparison for efficient layout of data in the layout area (see FIGS. 7A and 7B) while taking the sequence in which the data are to be laid out into consideration. In the present embodiment, from the description of XML data, it is interpreted that "each data material is composed of a set of an image and the accompanying comment, and layout processing should be with the image as a main component". Therefore, first, an image is laid out with reference to the image size information etc. obtained by the data analysis section 107. Then, the comment associated with the image is laid out in the remaining blank portion of the layout area. If the image size is so large that the image extends beyond the entire layout area, the image data is automatically zoomed out such that it is narrowly accommodated within the layout area.

When the column setting is designated (see FIG. 7B), if the image size exceeds the size of a column, the column size is automatically changed to a size large enough to accommodate the image. If the remaining marginal area is too small to receive the whole of the comment, the layout is configured such that the comment is displayed in the following page or column. On the other hand, when an image and a comment can be accommodated in their entirety within the entire layout range (see FIG. 7A), since the image and the comment are to be handled as a set, a new line start instruction, a new page start instruction, or a ruled line insertion instruction is given for an area immediately after an area for displaying the comment to thereby emphasize that the image and the comment form a set.

The template generating section 704 automatically generates a template corresponding to the data layout information, based on information calculated by the data layout-calculating section 703. In the present embodiment, this template is generated as XSLT (XML Stylesheet Language Transform) data adapted to XML data conversion.

The target printing apparatus-compatible data-converting section 705 temporarily converts XML data into HTML formatted data or XHTML (extensible HyperText Markup Language) formatted data, using XSLT data generated by the template generating section 704, and further converts the data into print data in a format specific to the printing apparatus. More specifically, if the target printing apparatus has a high processing capability and a large memory capacity, such as a copying machine, the data can be supplied as it is to the target printing apparatus without further processing. On the other hand, if the target printing apparatus has a low processing capability and a small memory capacity, such as an inkjet printer, it is necessary to further convert the document into a format adapted to the target printing apparatus, and therefore the converting operation is carried out. Finally, after completion of all the conversions, the document is output to the output section 109.

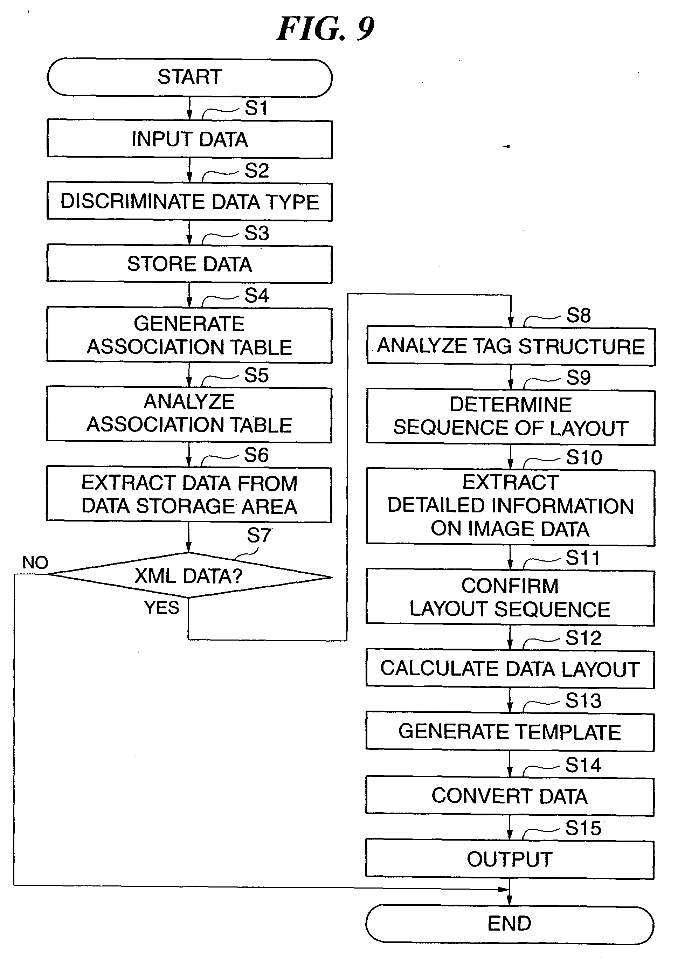

FIG. 9 is a flowchart showing the procedure of a layout output process. A processing program for this process is stored in a storage medium (the ROM 2 or the hard disk 8) in the computer, and executed by the CPU 1. First, the input section 103 receives a data material from the data material group 101 via the communication line 102 (step S1). The data material-distributing section 104 discriminates the type of each received data, i.e. determines whether the data is XML data or JPEG image data (step S2). Then, the data is stored in the data storage area 105 at a storage location associated with the data type (step S3). An association table from which each data and the storage location associated therewith can be determined using the identification code (ID) of the data is generated in the form of a file (step S4).

The data extracting section 106 checks the storage location of each data with reference to the generated association table (step S5), and extracts the associated data from the data storage area 105 (step S6). It is determined whether or not the extracted data is XML data (step S7). If the data is not XML data, the process is terminated. On the other hand, if the extracted data is XML data, the data analysis section 107 analyzes the tag structure of the XML data (step S8), and determines a sequence in which data are to be laid out, based on the result of the analysis (step S9). Further, detailed information, including size information, on image data is extracted (step S10).

Then, the layout processing section 108 confirms the sequence in which data are to be laid out (step S11), and performs calculation and comparison for efficient layout of the data within the layout area (step S12). The layout processing section 108 generates a template corresponding to the data layout information based on the calculated information (step S13). The layout processing section 108 converts the XML data into HTML formatted data or XHTML formatted data using the generated template, and further converts the data into a document in a format specific to the printing apparatus (step S14). After the conversion, the output section 109 outputs the document to the printing apparatus group 111 via the communication line 110 (step S15), followed by terminating the present process.

As described above, according to the layout output apparatus as the data processing apparatus of the first embodiment, it is possible to automatically calculate a layout suited to various data materials and output a document interpretable by a driver of a printing apparatus. This makes it possible to reduce a burden on the data material-generating side and cut down labor costs. Further, the data material-generating side can concentrate on generation of a data material without being conscious of layout of the materials themselves, which contributes to improvement of the quality of the data material per se. Furthermore, the layout processing side is equipped with an automatic layout function for processing various data materials, whereby it is possible to establish a brand-new service model in which the services of data material generation and layout processing are provided separately and which has never existed in the past. Particularly in the first embodiment, it is possible to perform layout processing in which priority is given to images.

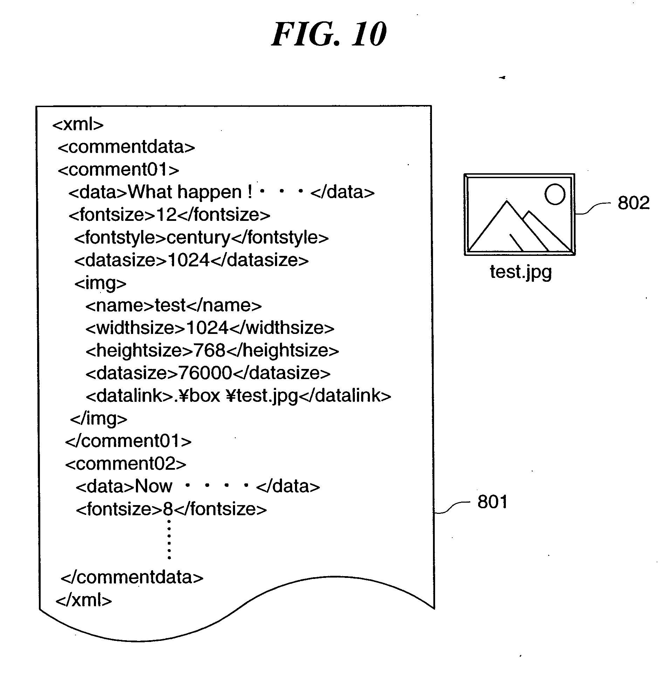

Next, a description will be given of a second embodiment of the present invention with reference to FIG. 10.

The configuration of a layout output apparatus as a data processing apparatus according to the second embodiment is the same as that of the data layout output apparatus as the data processing apparatus according to the first embodiment, and therefore description thereof is omitted. In the second embodiment, the case is shown where a data material different from that in the first embodiment is provided from the data material group 101.

FIG. 10 is a diagram showing the data material provided from the data material group 101 in the second embodiment.

In FIG. 10, reference numeral 801 designates XML data containing comment data and image data information. The XML data is described in a tag structure which is determined in advance by a data sending side and a data receiving side and thus interpreted in a predetermined manner by the both sides. All information is contained in an area defined by <commentdata> tags, and in this area defined by the <commentdata> tags, information on data associated with the comment is described in an area defined by <comment01> tags. In the present example, the information includes font size information, font style information, and data amount information. Further, image data as an illustration of the comment is described in an area defined by <img> tags. Reference numeral 802 designates image data on which information is described in the XML data. In FIG. 10, the image data is in the JPEG image format.

The data analysis section 107 checks the nested tag structure of the XML data received from the data extracting section 106. The tag structure-analyzing section 502 analyzes the tag structure of the XML data. First, the tag structure-analyzing section 502 finds <commentdata> tags, and then finds <comment01> tags. Within the area defined by the <comment01> tags, the tag structure-analyzing section 502 finds data related to the comment data and the accompanying image data within the area defined by the <img> tags.

The layout sequence-determining section 503 determines a sequence in which data are to be laid out based on the result of the analysis performed by the tag structure-analyzing section 502. First, based on the analysis result, the data analysis section 107 interprets that the comment data and the accompanying image data form a set and are defined as one material defined. The <img> tags are described in an area defined by the <img01> tags, and therefore the data analysis section 107 interprets that the comment data is given priority in layout processing, that is, the comment data is laid out first. The data material detailed information-extracting section 504 extracts information, including the font information, and the size information of the image data, as well as the data obtained by the layout sequence-determining section 503.

Further, the layout processing section 108 performs the following processing. The layout sequence-confirming section 702 confirms information, including a sequence in which the data are to be laid out, with reference to the data obtained by the data analysis section 107. The data layout-calculating section 703 performs calculation and comparison for efficient layout of data within the layout area (see FIGS. 7A and 7B) while taking the sequence in which the data are to be laid out into consideration.

In the present embodiment, from the description of XML data, it is interpreted that "each data material is composed of a set of a comment and an image, and layout processing should be with the comment as a main component". Therefore, first, the comment data is laid out with reference to the amount of comment data or like information obtained by the data analysis section 107. Then, the image data associated with the comment data is laid out in the remaining blank portion of the layout area. If the amount of the comment data is so large that the comment data extends beyond the entire layout area, the font size and/or the like are/is automatically adjusted such that the comment is narrowly accommodated within the layout area, or the portion of the comment data which cannot be accommodated in the layout area is continuously output to the following page or column. If the remaining blank portion is too small to accommodate the image, since the comment data is given priority, the image size is adjusted such that the image can be fully accommodated in the small marginal portion, or the layout is configured such that the image is displayed in the following page or column. On the other hand, when the image and the comment can be accommodated in their entirety within the layout area, since the image and the comment are to be handled as a set, a new line start instruction, a new page start instruction, or a ruled line insertion instruction is given for an area immediately after an area for displaying the image to thereby emphasize that the comment and the image form a set.

The template generating section 704 automatically generates a template corresponding to the data layout information, based on the information calculated by the data layout-calculating section 703. In the present embodiment, this template is generated as XSLT data adapted to XML data conversion.

As described above, according to the layout output apparatus of the second embodiment, data layout giving priority to comment data can be achieved.

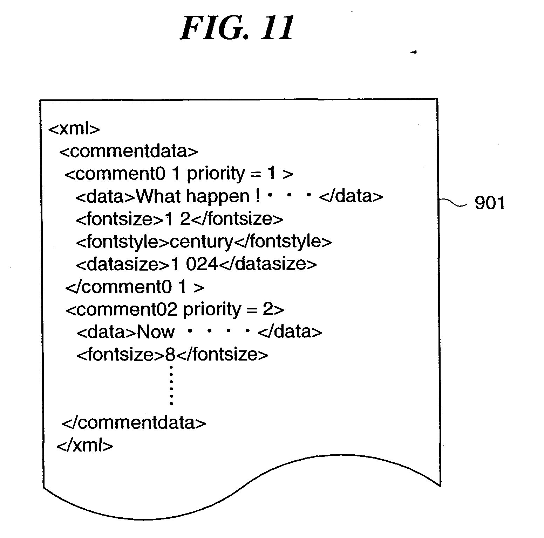

Next, a description will be given of a layout output apparatus as a data processing apparatus according to a third embodiment of the present invention with reference to FIG. 11.

The configuration of the layout output apparatus as the data output apparatus according to the third embodiment is the same as that of the layout output apparatus as the data output apparatus according to the first embodiment, and therefore description thereof is omitted. In the third embodiment, the case is shown where a data material different from those in the first and second embodiments are provided from the data material group 101.

FIG. 11 is a diagram showing the data material provided from the data material group 101 in the third embodiment.

In FIG. 11, reference numeral 901 designates XML data containing information on comment data. The XML data is described in a tag structure which is determined in advance by a data sending side and a data receiving side and thus interpreted in a predetermined manner by the both sides. All information is contained in an area defined by <commentdata> tags, and in this area, information on data associated with the comment is described in an area defined by <comment01> tags. In the illustrated example, the information includes font size information, font style information, and data amount information.

The data analysis section 107 checks the nested tag structure of the XML data received from the data extracting section 106. The tag structure-analyzing section 502 analyzes the tag structure of the XML data. First, the tag structure-analyzing section 502 finds <commentdata> tags, and then finds <comment01> tags. Further, the tag structure-analyzing section 502 finds "priority" as an attribute of the <comment01> tags.

The layout sequence-determining section 503 determines a sequence in which data are to be laid out based on the result of the analysis performed by the tag structure-analyzing section 502. First, based on the analysis result, the data analysis section 107 interprets that the XML data contains only information on comments, and that comment data are to be arranged in order of decreasing priority according to the value of the attribute of "priority". The data material detailed information-extracting section 504 extracts information including font size information, as well as the data obtained by the layout sequence-determining section 503.

Further, the layout processing section 108 performs the following processing. The layout sequence-confirming section 702 confirms information, including the sequence in which data are to be laid out, with reference to the data obtained from the data analysis section 107. The data layout-calculating section 703 performs calculation and comparison for efficient layout of data within the layout area (see FIGS. 7A and 7B) while taking the sequence in which the data are to be laid out into consideration.

In the present embodiment, from the description of XML data, it is interpreted that "data information contains only comments containing the order of priorities in layout". Therefore, data of a comment with the highest priority, which was obtained by the data analysis section 107, is laid out first in the layout area. Then, data of a comment with the second highest priority is laid out in the remaining blank portion of the layout area. If the amount of the comment data is so large that the comment data extends beyond the entire layout area, layout is configured such that an excess portion of the comment data is displayed in the following page or column, or when column setting is designated, the size of columns is changed according to the data amount, or when the total number of pages is unchangeable, data of comments with the lowest priorities is discarded so as not to be displayed.

The template generating section 704 automatically generates a template corresponding to the data layout information, based on the information calculated by the data layout-calculating section 703. In the present embodiment as well, the template is generated as XSLT data adapted to XML data conversion.

As described above, according to the layout output apparatus as the data processing apparatus of the third embodiment, comment data can be arranged in accordance with the order of priorities described in XML data.

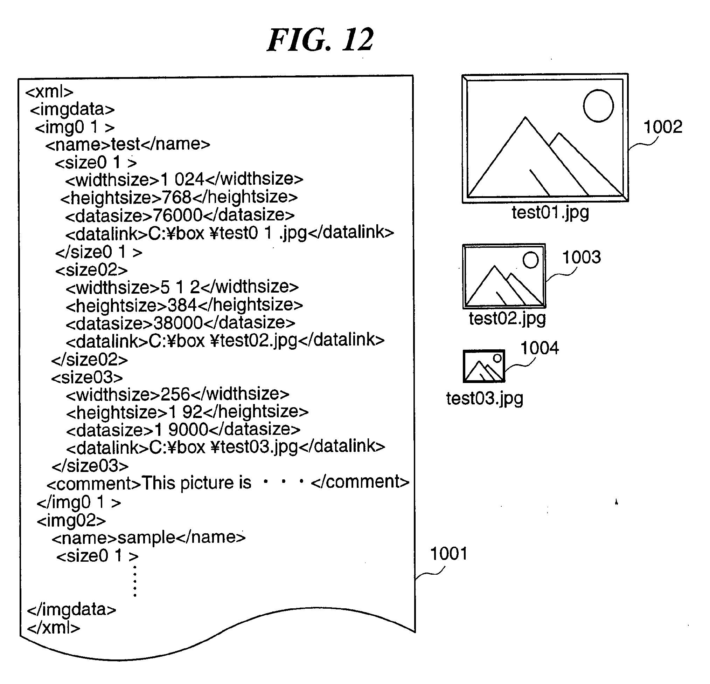

Next, a description will be given of a layout output apparatus as a data processing apparatus according to a fourth embodiment with reference to FIG. 12.

The configuration of the layout output apparatus as the data processing apparatus according to the fourth embodiment is the same as that of the layout output apparatus as the data processing apparatus according to the first embodiment, and therefore description thereof is omitted. In the fourth embodiment, the case is shown where a data material different from those in the first, second, and third embodiments are provided from the data material group 101.

FIG. 12 is a diagram showing the data material provided from the data material group 101 in the fourth embodiment.

In FIG. 12, reference numeral 1001 designates XML data containing information on image data. The XML data is described in a tag structure which is determined in advance by a data sending side and a data receiving side and thus interpreted in a predetermined manner by the both sides. All information is contained in an area defined by <imgdata> tags, and in this area, information on first data associated with images is described in an area defined by <img01> tags. In the present example, this information includes image size information, data amount information, and information on data material storage locations. Reference numerals 1002, 1003, and 1004 designate image data whose information is contained in the area defined by the <img01> in the XML data. These image data have the same contents except for their sizes. The image data is in the JPEG image format.

The data analysis section 107 checks the nested tag structure of the XML data received from the data extracting section 106. The tag structure-analyzing section 502 analyzes the tag structure of the XML data to find the <imgdata> tags first and the <img01> tags next. Then, the tag structure-analyzing section 502 continues the analysis to find <size01> tags, <size02> tags, and so on. The layout sequence-determining section 503 determines a sequence in which data are to be laid out based on the result of the analysis performed by the tag structure-analyzing section 502. First, based on the analysis result, the data analysis section 107 interprets that the XML data contains only the image data, and information on the image data having the same contents and different sizes and locations associated therewith are described in the XML data. The data material detailed information-extracting section 504 extracts information including the information on the image data, as well as the data obtained by the layout sequence-determining section 503.

Further, the layout processing section 108 performs the following processing. The layout sequence-confirming section 702 confirms information, including a sequence in which the data are to be laid out, with reference to the data obtained by the data analysis section 107. The data layout-calculating section 703 performs calculation and comparison for efficient layout of the data within the layout area (see FIGS. 7A and 7B) while taking the sequence in which the data are to be laid out into consideration.

In the present embodiment, it is interpreted that "the XML data contains only information on image data, and there are provided image data having the same contents and different sizes", and therefore an image data having a size suited to the entire layout range is automatically picked up from the sizes of the image data in the XML data and the image data having the size is laid out. Further, when there are a plurality of input XML data, and each of the XML data has contents described in the same tag structure as shown in the XML data 1001, these images are compared with the entire layout range, and calculation is performed such that all the images can be fully accommodated in the layout area. Then, image data corresponding to the data size(s) obtained by the calculation is (are) selected from the XML data, and laid out in the layout area.

The template generating section 704 automatically generates a template corresponding to the data layout information, based on the information calculated by the data layout-calculating section 703. In the present embodiment as well, the template is generated as XSLT data adapted to XML data conversion.

As described above, according to the layout output apparatus as the data processing apparatus according to the fourth embodiment, images can be arranged in a size or sizes in accordance with the layout area.

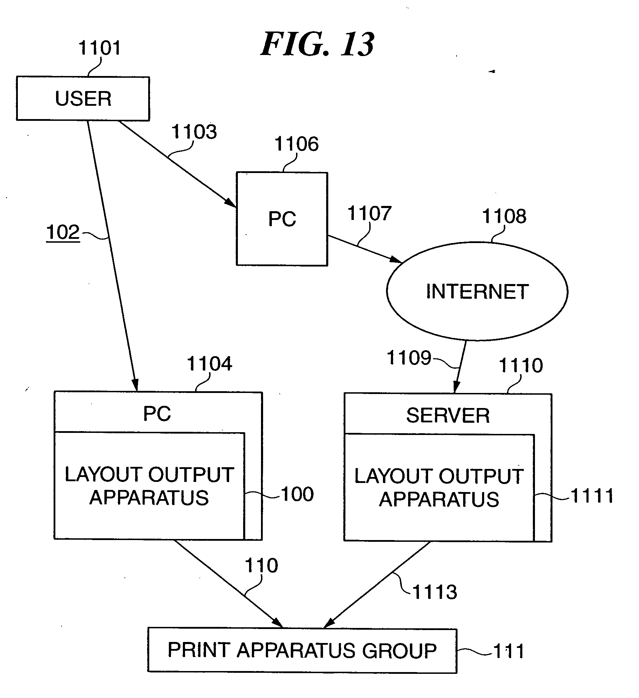

Next, a description will be given of a fifth embodiment of the present invention with reference to FIGS. 13 to 20.

First, a description will be given of the outline of a system including PCs (personal computers) and a server, each of which implements the data processing apparatus according to the fifth embodiment. In the present embodiment, the PCs and the server are provided with a layout processing function for processing contents described using XML as a markup language.

In the following, component elements corresponding to those in the first to fourth embodiments are designated by identical reference numerals, and duplicate description thereof is omitted.

FIG. 13 is a diagram schematically showing the configuration of the system including the PCs and the server according to the present embodiment. In FIG. 13, reference numeral 1101 designates a user who uses the PCs 1104 and 1106, described in detail hereinafter. The user 1101 instructs the PCs 1104 and 1106 to output image data and/or text data (hereinafter referred to as "material data") which he desires to be laid out, and layout area data (e.g. template data) prepared in advance. In response to the instruction from the user 1101, the PC 1104 lays out material data in a layout area designated by the layout area data, generates print data printable by a print apparatus group 111, referred to hereinafter, and outputs (110) the generated print data to the print apparatus group 111. The above-mentioned layout process in the PC 1104 is executed by a layout output apparatus 100, described in detail hereinafter.

The layout output apparatus 100 is integrated in the PC 1104, and executes the layout process based on provided material data and layout area data in response to an instruction from the user 1101. The PC 1106 is a personal computer connectable to a network, such as the Internet 1108. It should be noted that a mobile terminal device, such as a cellular phone or a PDA connectable to the network may be used in place of the PC 1106. Further, a leased line, a radio communication line, or a combination of the two lines may be used in place of the Internet 1108.

Reference numeral 1110 designates the server. The server 1110 receives material data and layout area data via the Internet 1108, lays out the material data in a layout area designated by the layout area data, generates print data printable by the print apparatus group 111, and outputs the generated print data to the print apparatus group 111. The above-mentioned layout process in the server 1110 is executed by a layout output apparatus 1111, described in detail hereinafter. The layout output apparatus 1111 is integrated in the server 1110, and executes the layout process based on material data and layout area data received by the server 1110. In short, the layout output apparatus 1111 performs a process similar to that executed by the layout output apparatus 100. The print apparatus group 111 receives print data from the PC 1104 or the server 1110 and carries out printing to output printed matter. The configuration described above enables the user 1101 to utilize the function (e.g. the layout processing function) of the server 1110 via the Internet 1108 using the PC 1106.

Now, a description will be given of the procedure of a printing process performed by the system shown in FIG. 13 utilizing the Internet 1108. First, when receiving a layout instruction (1103) from the user 1101, the PC 1106 sends material data and layout area data together with a layout instruction to the server 1110 in which the layout output apparatus 1111 is integrated. Accordingly, the server 1110 receives the material data and the layout area data together with the layout instruction. Within the server 1110 having received the data and instruction, the layout output apparatus 1110 is started to execute the layout process based on the received material data and layout area data. Then, print data generated by the layout process is output (1113) to the print apparatus group 111, followed by terminating the sequence of operations for the printing process.

As shown in FIG. 13, the functions of the layout output apparatus 100 or 1111 may be realized by PCs used by users, or by a server connected to the network and accessible by terminal devices connected to the network.

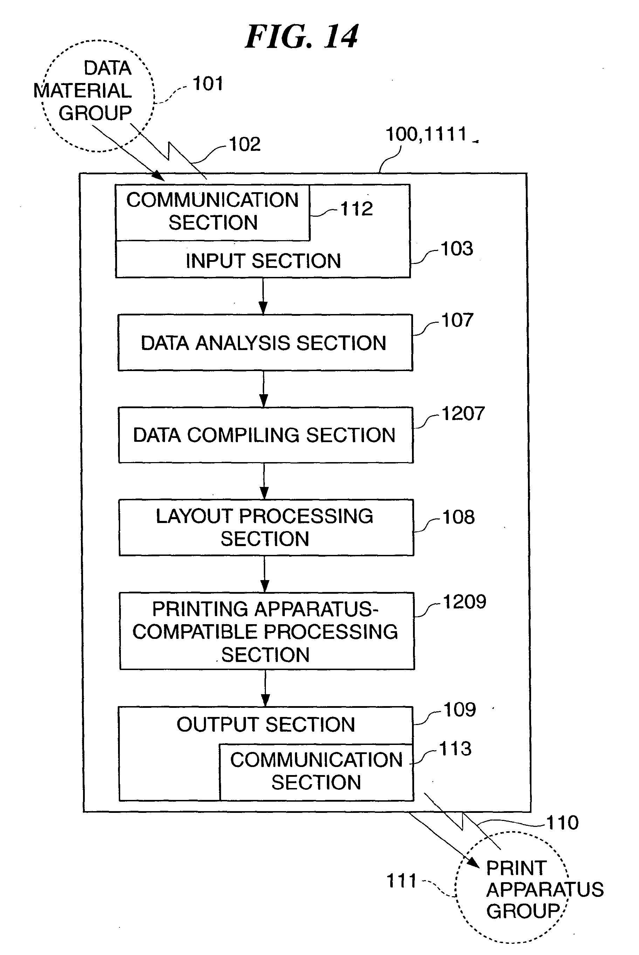

FIG. 14 is a diagram showing the internal configuration of the layout output apparatus 100 or 1111 as the data processing apparatus according to the present embodiment.

Reference numeral 101 designates a data material group. The data material group 101 is comprised of a plurality of data materials including material data, such as image data and text data, and layout area data. Reference numeral 102 designates a communication line via which data materials are sent and received. The communication line 102 may be a leased line, a radio network, a Bluetooth network, or any other suitable one of various communication lines. Reference numeral 112 designates a communication section (receiving device). The communication section 112 is compatible with various forms of communication (communication methods), so that the communication section 112 can receive various kinds of data via the communication line 102. Reference numeral 103 designates an input section. The input section 103 incorporates the communication section 112, and receives data materials received by the communication section 112.

Reference numeral 107 designates a data analysis section. The data analysis section 107 discriminates the type of each data contained in a data material received by the input section 103, processes and analyzes the data on a type-by-type basis, and extracts information (hereinafter referred to as "extracted information") required for preparation of a layout. This extracted information includes information on the size and shape of each material data. Reference numeral 1207 designates a data compiling section. The data compiling section 1207 compiles extracted information items extracted from the material data other than layout area data, into one XML data file.

Reference numeral 108 designates a layout processing section. The layout processing section 108 compares between the XML data generated by the data compiling section 1207 and the layout area data, and processes material data if necessary, to lay out the material data at optimal locations within the layout area. Reference numeral 1209 designates a printing apparatus-compatible processing section. The printing apparatus-compatible processing section 1209 converts layout data laid out by the layout processing section 108 into a document (print data) interpretable by a driver of the print apparatus group 111. Reference numeral 109 designates an output section, which includes, similarly to the input section 103, a communication section 113 compatible with various forms of communication, and can output documents prepared in the printing apparatus-compatible processing section 1209 via a communication line 110, referred to hereinafter.

Similarly to the communication section 112 of the input section 103, the communication section 113 is capable of transmitting various kinds of data (including the above-mentioned document). The communication line 110 connects between the PC 1104 or the server 1110 and the print apparatus group 111, for data communication. Similarly to the communication line 102, the communication line 110 can be implemented by various kinds of communication lines.

Next, a detailed description will be given of an analysis process executed by the data analysis section 107 appearing in FIG. 14.

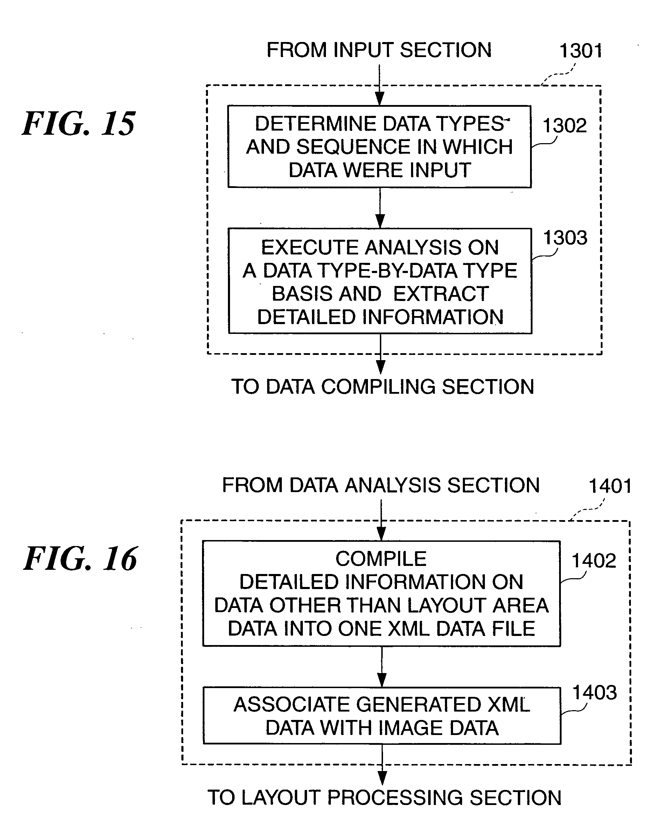

FIG. 15 is a flowchart showing details of the analysis process which is generally represented by a step S1301 and comprises steps S1302 and S1303. In the step S1302, the data analysis section 107 discriminates the type of each of data contained in a data material received from the input section 103, and determines a sequence in which the data were input, followed by storing each data and its position in the sequence in association with each other.

Then, in the step S1303, the data analysis section 107 performs analysis on the data on a data type-by-data type basis and extracts detailed information. More specifically, if the input data is image data, the data analysis section 107 extracts information on the height and width sizes of the image, the compression format, and so forth. On the other hand, if the input data is text data, information on the font size, the number of characters, the font style, and so forth is extracted. Further, if the input data is data indicative of a layout area, the data analysis section 107 extracts information on the height and width sizes or the radius size, shape, etc. of the layout area. After the extraction is completed, the data analysis section 107 outputs the extracted data to the data compiling section 1207.

Next, a detailed description will be given of a compilation process executed by the data compiling section 1207 appearing in FIG. 14.

FIG. 16 is a flowchart showing details of the compilation process which is generally represented by a step S1401 and comprises steps S1402 and S1403. In the step S1402, the data compiling section 1207 compiles the detailed information on the data received from the data analysis section 107. In this step, the data compiling section 1207 compiles the detailed information on the data (material data) other than the layout area data, into one XML data file.

When the received material data contains image data, in the step S1403, the data compiling section 1207 adds link path information indicative of the location of each image data to the compiled XML data file to thereby associate the XML data and the image data with each other. Now, the process of associating XML data and image data, which is executed in the step S1403, will be described by referring to a specific example.

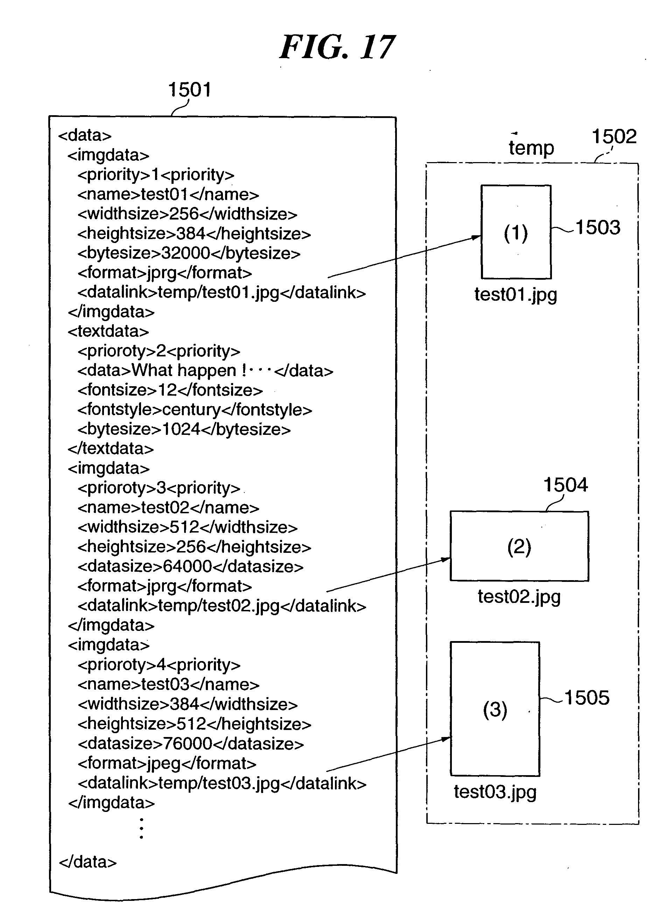

FIG. 17 is a view illustrating a specific example of association between XML data and image data executed in the step S1403. In FIG. 17, reference numeral 1501 designates an example of a XML data file that the data compiling section 1207 generates by compiling detailed information on material data. As shown in the XML data 1501, when image data is provided as input data (material data) from which detailed information is to be extracted, information items e.g. on the height and width sizes and file name of the image data are described in areas defined by <widthsize> tags and <name> tags, respectively. By the processing described above, the data compiling section 1207 generates the XML data illustrated in FIG. 17, based on the input data.

Further, the data compiling section 1207 uses <priority> tags to assign a layout priority (1, 2, 3, ...) to each of the material data in a sequence in which the material data were input or designated. Reference numeral 1502 designates a "temp" (temporary storage) area for temporarily storing the entities of image data, and input image data are stored here temporarily. As shown in FIG. 17, image data 1503 to 1505 are temporarily stored in the temporary area 1502. The image data 1503 to 1505 were input to the input section 103 and determined as image data through analysis by the data analysis section 107. The image data are different in size. The file names of the image data 1503 to 1505 are test01.jpg, test02.jpg, and test03.jpg, respectively. The temporary area 1502 is provided in each of respective memories of the PC 1104 and the server 1110.

The data compiling section 1207 designates a storage location in the temporary area 1502 using <datalink> tags in the XML data 1501 as a pass to a link destination. For example, as shown by an arrow in FIG. 17, the image data 1503 (test01.jpg) stored in the temporary area 1502 is designated by the description of "test01.jpg" within an area defined by the <datalink> tags.

Next, a description will be given of the details of the layout process executed by the layout processing section 108 appearing in FIG. 14.

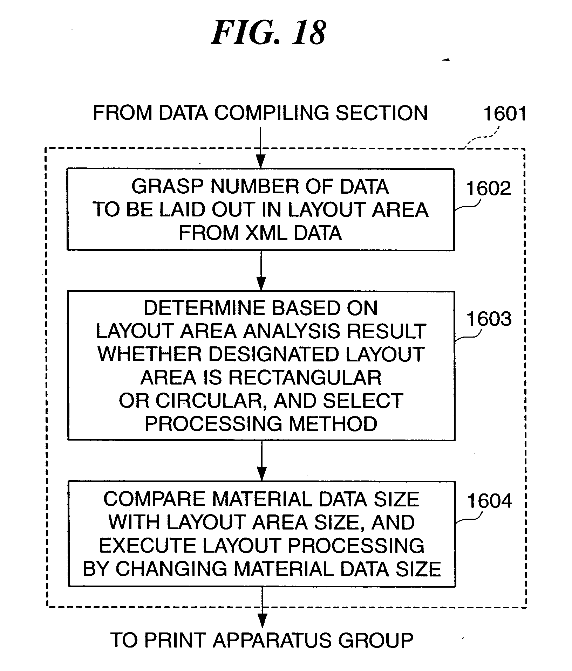

FIG. 18 is a flowchart showing details of the layout process which is generally represented by a step S1601 and comprises steps S1602, S1603, and S1604. In the step S1602, the layout processing section 108 reads XML data generated by the data compiling section 1207, and grasps and stores the number of data (material data) to be laid out in the layout area. Then, in the step S1603, the layout processing section 108 reads layout area data, and determines whether the layout area has a rectangular shape or another. Processing executed in the following step S1604 differs depending on the result of the determination in the step S1603.

In the step S1604, the layout processing section 108 lays out the material data, changes the size of the material data, and/or like processing while comparing the size of the material data with that of the layout area obtained based on the layout area data.

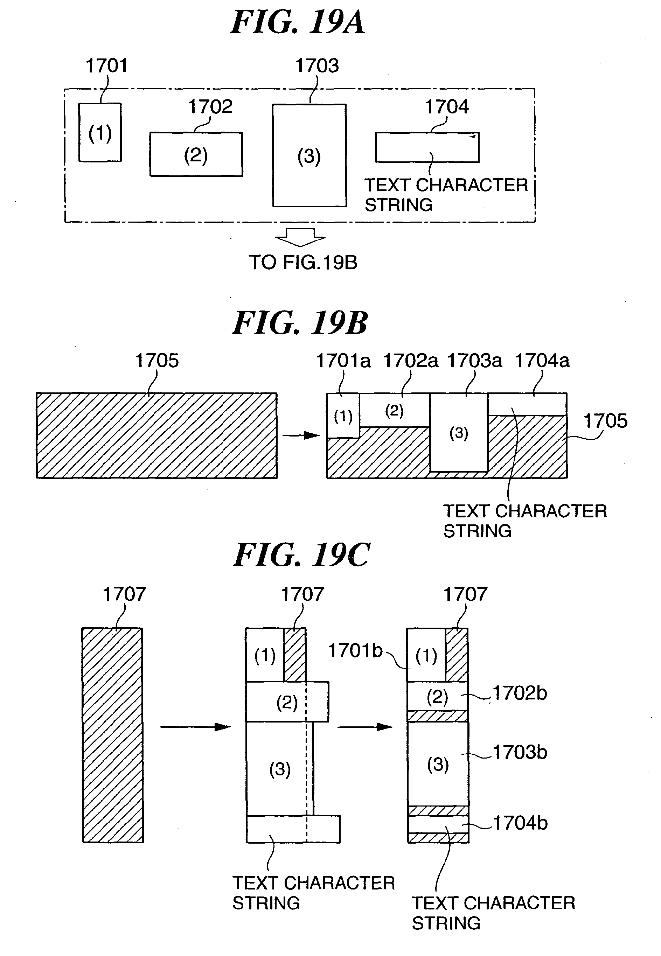

Now, processing executed in the step S1604 when the layout area has a rectangular shape will be described by referring to a specific example. FIGS. 19A to 19C are views useful in explaining processing executed in the step S1604 when the layout area has a rectangular shape. In the following, a description will be given of the case where the layout processing section 108 lays out four pieces of material data shown in FIG. 19A in a layout area 1705 (rectangular) appearing in FIG. 19B or in a layout area 1707 (rectangular) appearing in FIG. 19C.

FIG. 19A is a view showing a material data group. In FIG. 19A, reference numerals 1701 to 1703 designate image data different in size and type. Reference numeral 1704 designates text data. In a layout process for laying out these material data in the layout area 1705, first, the layout processing section 108 determines which of the height size of the layout area 1705 and the width size of the same is larger. If the width size is the larger of the two, the layout processing section 108 compares the width size (horizontal length) of the layout area with the total sum of the respective width sizes of the material data to thereby determine whether or not all of the material data can be accommodated in the layout area 1705. In other words, it is determined whether or not the material data can be laid out in the layout area 1705 without being processed.

If the material data cannot be laid out in the layout area 1705 without being processed, the layout processing section 108 reduces the height and width sizes of one or all of the material data with the ratio between the height and the width maintained. In this case, the layout processing section 108 carries out the reduction and layout processing such that the reduced material data 1701a to 1704a can be all accommodated in the layout area 1705 as shown in the right-hand view of FIG. 19B.

Next, a description will be given of the case where the same material data (material data shown in FIG. 19A) are to be laid out in a rectangular layout area 1707 as shown in the left-hand view of FIG. 19C, which is narrow i.e. longer than wide. In this case, processing is performed in the same manner as in the layout processing shown in FIG. 19B. More specifically, the layout processing section 108 compares the height size (vertical length) of the layout area with the total sum of the respective height sizes of the material data to thereby determine whether or not all of the material data can be accommodated in the layout area 1707. If the material data cannot be laid out in the layout area 1707, the layout processing section 108 reduces the height and width sizes of each material data with the ratio between the height and the width maintained to thereby fit the material data in the layout area 1707 as shown in the middle view of FIG. 19C. As a result, the material data can be accommodated in the layout area 1707 in the vertical direction, but some material data, such as figures and text data, may extend off the layout area 1707 in the horizontal direction as shown in the middle view of FIG. 19C. In such a case, the layout processing section 108 carries out reduction processing again to further reduce the material data in size such that each data is horizontally accommodated in the layout area 1707.

As described above, the layout processing section 108 is capable of automatically laying out a plurality of pieces of material data in a rectangular layout area. Although in the above described example, the layout processing section 108 lays out material data in one row or in one column, this is not limitative, but it is possible to set the maximum number of data that can be arranged in one row or in one column, and configure the layout processing section 108 such that it automatically performs processing, such as column setting, to thereby lay out material data in a plurality of rows or columns.

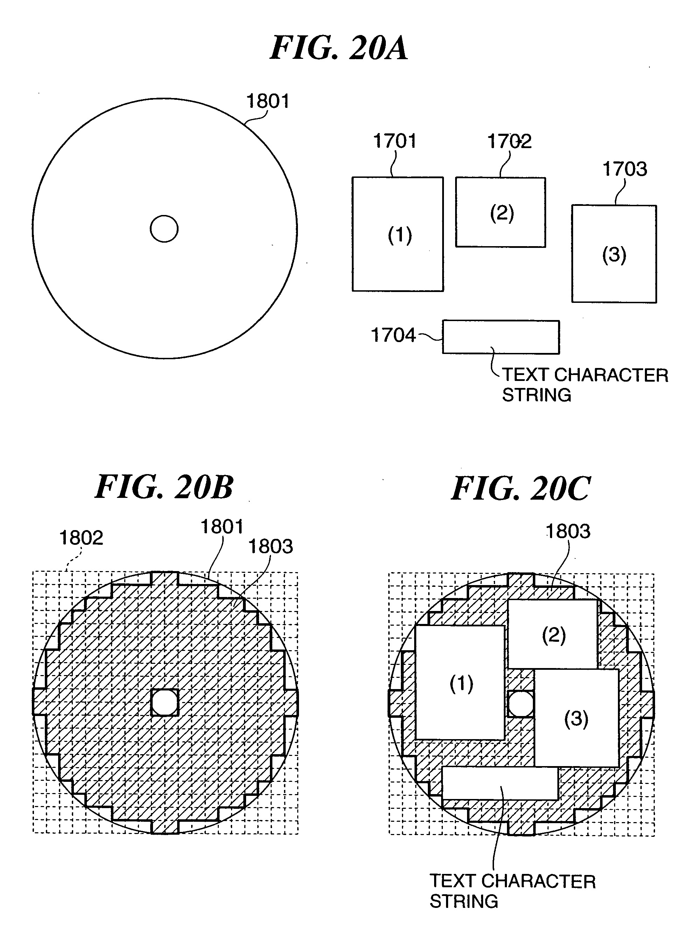

Next, processing executed in the step S1604 when the layout area has a non-rectangular shape will be described by referring to a specific example. FIGS. 20A to 20C are views useful in explaining the processing executed in the step S1604 when the layout area has a non-rectangular shape (doughnut shape). In the following, a description will be given of the case where the layout processing section 108 lays out the four material data (image data 1701 to 1703) shown in FIG. 19A in a doughnut-shaped layout area 1801 shown in the left-hand view of FIG. 20A. The doughnut-shaped layout area 1801 is e.g. for a CD (compact disk) label.

The layout processing section 108 imaginarily covers the entire layout area 1801 with a sheet material of small squares 1802 like those of graph paper as shown in FIG. 20B. Then, an area enclosing squares within the layout area 1801 is determined as an area actually used for layout processing. A shaded area shown in FIG. 20B is a layout area 1803 actually used for layout processing.

Next, the layout processing section 108 sets a layout starting point as appropriate, and starts fitting the material data within the layout area in order of decreasing priority. This processing is performed clockwise from the starting point. In this processing, if a piece of material data extends off the layout area 1803, the layout processing section 108 reduces the height and width sizes of the material data at an appropriate ratio. As a result, the material data is reduced in height and width such that it can be accommodated in the layout area 1803, and laid out therein.

Similarly, in the case of laying out second and following pieces of material data, the layout processing section 108 lays out a piece of material data given the next highest priority in the remaining blank portion of the layout area. When the blank portion becomes smaller than a predetermined threshold value, the layout processing section 108 discards (gives up laying out) the remaining material data (yet-to-be laid-out material data). As described above, the layout processing section 108 lays out high-priority material data preferentially, but does not lay out low-priority material data when layout is impossible. In short, the layout processing section 108 can execute layout processing in accordance with the order of priorities.

More specifically, assuming that layout priorities "1" (highest) to "3" (third highest) are sequentially assigned to the image data 1701 to 1703, and a layout priority "4" (lowest priority) is assigned to the text data 1704, the layout processing section 108 arranges the image data 1701 to 1703 clockwise in the mentioned order, and finally lays out the text data 1704. Thus, a layout shown in FIG. 20C is achieved, for example.

As described above, the layout processing section 108 in the present embodiment is capable of laying out a group of material data in layout areas different in shape.

Next, the printing apparatus-compatible processing section 1209 further converts the layout data generated by the layout processing section 108 into a format specific to the print apparatus group 111 to thereby convert the layout data to a document (print data). More specifically, if the print apparatus group 111 consists of apparatuses which have a high processing capability and a large memory capacity, such as copying machines, the layout data is output as it is to the print apparatus group 111 without further processing, whereas if the print apparatus group 111 consists of apparatuses which have a low processing capability and a small memory capacity, such as inkjet printers, the layout data is converted into a document in a format adapted to the print apparatus group 111. Finally, the converted document (print data) is output to the printing apparatus group whereby the whole processing of the layout output apparatus 100 is completed.

Although in the above described embodiment, image data is temporarily stored in the "temp" area 1502, this is not limitative, but when data is processed on a packet-by-packet basis as in streaming, it is possible to carry out real-time layout processing on image data sequentially received.

Further, although in the above described embodiment, XML is employed as a markup language, this is not limitative, but any markup language may be used for the layout processing, which describes a document structure (headings, links, etc.), modifying information (character sizes, column settings, etc.), and so forth, by surrounding portions of the document using special character strings called "tags".

The PC 1104 and the server 1110 in the above described embodiment are thus capable of performing layout processing automatically even if a layout area has a non-rectangular shape, so that it is possible to shorten working time required for layout processing, as is distinct from the prior art in which layout processing is performed manually, thereby reducing labor costs. Further, in layout processing for CD or DVD labels having a non-rectangular layout area, which has conventionally been performed with the assistance of special application software, the PC 1104 and the server 1110 in the present embodiment are capable of performing the layout processing without the assistance of the special application software, using the markup language-based technique. Furthermore, since the server 1110 provides an environment enabling layout processing in a non-rectangular layout area to a user terminal via the Internet 108, a brand-new Internet service model can be established. When the present layout processing is provided as an Internet service, print data output from the server 1110 may be returned to a user terminal via the Internet 108.

Although in the above described embodiment, the PC 1104 (server 1110) reads a program for realizing the functions of the layout output apparatus 100 (1111), and the program is executed by the CPU to realize the functions, this is not limitative, but a part or all of the functions may be realized by special hardware.

The present invention is not limited to the above embodiments, but various changes and modifications can be made within the spirit and scope of the present invention insofar as the functions recited in the appended claims and the functions possessed by the configuration of any of the above-described embodiments are achieved.

It is to be understood that the object of the present invention may also be accomplished by supplying a system or an apparatus with a storage medium (or a recording medium) in which a program code of software, which realizes the functions of any of the above described embodiments is stored, and causing a computer (or CPU or MPU) of the system or apparatus to read out and execute the program code stored in the storage medium.

In this case, the program code itself read from the storage medium realizes the functions of any of the above described embodiments, and hence the program code and a storage medium in which the program code is stored constitute the present invention.

Examples of the storage medium for supplying the program code include a floppy (registered trademark) disk, a hard disk, a magnetic-optical disk, a CD-ROM, a CD-R, a CD-RW, a DVD-ROM, a DVD-RAM, a DVD-RW, a DVD+RW, a magnetic tape, a nonvolatile memory card, and a ROM. Alternatively, the program may be downloaded via a network from another computer, a database, or the like, not shown, connected to the Internet, a commercial network, a local area network, or the like.

Further, it is to be understood that the functions of any of the above described embodiments may be accomplished not only by executing the program code read out by a computer, but also by causing an OS (operating system) or the like which operates on the computer to perform a part or all of the actual operations based on instructions of the program code.

Further, it is to be understood that the functions of any of the above described embodiments may be accomplished by writing the program code read out from the storage medium into a memory provided on an expansion board inserted into a computer or a memory provided in an expansion unit connected to the computer and then causing a CPU or the like provided in the expansion board or the expansion unit to perform a part or all of the actual operations based on instructions of the program code.

Further, the program code may be a so-called differential file (differential program) which is capable of realizing the functions described hereinbefore by combination with a program code already recorded in a computer system.

### CROSS REFERENCE TO RELATED APPLICATION

This application claims priority from Japanese Patent Applications Nos. 2004-040479 filed February 17, 2004 and 2004-081174 filed March 19, 2004, which are hereby incorporated by reference herein.

## Claims

1. A data processing apparatus that is connectable to at least one printing apparatus and that is capable of performing layout processing on input data, comprising:
an input device that inputs data;
an analysis device that analyzes the input data;
a generation device that generates layout information on the data based on a result of the analysis by said analysis device; and
a converting device that lays out the data based on the generated layout information and converts the data laid out into a document printable by the printing apparatus.

2. A data processing apparatus as claimed in claim 1, comprising an output device that outputs the document obtained by the conversion to the printing apparatus.

3. A data processing apparatus as claimed in claim 1, wherein said converting device includes a preparation device that prepares a template based on the generated layout information, and said converting device lays out the data using the prepared template.

4. A data processing apparatus as claimed in claim 1, wherein said generation device performs at least one of comparison, selection, and processing of the data to thereby generate the layout information.

5. A data processing apparatus as claimed in claim 1, wherein the input data includes XML data, and said analysis device analyzes a tag structure of the XML data.

6. A data processing apparatus as claimed in claim 5, wherein said analysis device analyzes data of comments.

7. A data processing apparatus as claimed in claim 5, wherein said analysis device analyzes data of images.

8. A data processing apparatus as claimed in claim 1, wherein said generation device generates the layout information based on a sequence of pieces of data described in the input data.

9. A data processing apparatus as claimed in claim 1, wherein said generation device generates the layout information based on an order of priorities described in the data.

10. A data processing apparatus as claimed in claim 1, comprising a discrimination device that discriminates a type of each of pieces of data composing the input data, a storage device that stores the pieces of data in a manner distributed based on the discriminated types of the pieces of data, and an extraction device that extracts the stored data, and
wherein said generation device generates layout information on the extracted data.

11. A data processing apparatus as claimed in claim 10, wherein said storage device generates an association table showing association between the pieces of data and storage locations where the pieces of data are stored, and said extraction device extracts the stored data using the association table.

12. A data processing apparatus comprising:
a receiving device that receives material data to be laid out, and layout area data defining a layout area;
an analysis device that analyzes at least one of a type and a shape of each of the material data received by said receiving device;
a determining device that determines whether the layout area defined by the layout area data received by said receiving device is rectangular or non-rectangular; and
a layout device that is operable when said determining device determines that the layout area is rectangular, to perform layout processing with reference to a result of the analysis by said analysis device, in a manner such that the material data are accommodated in the rectangular layout area, and operable when said determining device determines that the layout area is non-rectangular, to perform layout processing with reference to the result of the analysis by said analysis device, in a manner such that the material data are laid out in the non-rectangular layout area according to an order of priorities of the material data.

13. A data processing apparatus as claimed in claim 12, further comprising a data compiling device that compiles the material data into a data file described in a markup language, based on the result of the analysis by said analysis device, and
wherein said layout device performs layout processing using the data file generated by said data compiling device.

14. A data processing apparatus as claimed in claim 12, wherein when the material data include image data, said data compiling device describes information specifying a storage location where the image data is stored, in the data file.

15. A data processing apparatus as claimed in claim 13, wherein the markup language is XML.

16. A data processing apparatus as claimed in claim 12, further comprising a converting device that converts print data obtained by the layout processing performed by said layout device into a data format that can be processed by a destination printing apparatus.

17. A data processing apparatus as claimed in claim 12, wherein said receiving device receives the material data and the layout area data from a user terminal requesting layout processing via a network.

18. A data processing method of performing layout processing on input data using a computer connected to at least one printing apparatus, comprising:
an input step of inputting data;
an analysis step of analyzing the input data;
a generating step of generating layout information on the data based on a result of the analysis in said analysis step; and
a converting step of laying out the data based on the generated layout information and converting the data laid out into a document printable by the printing apparatus.

19. A data processing method executed using a data processing apparatus, comprising:
a receiving step of receiving material data to be laid out, and layout area data defining a layout area;
an analysis step of analyzing at least one of a type and a shape of each of the material data received in said receiving step;
a determining step of determining whether the layout area defined by the layout area data received in said receiving step is rectangular or non-rectangular; and
a layout step of performing layout processing with reference to a result of the analysis in said analysis step, in a manner such that the material data are accommodated in the rectangular layout area, when it is determined in said determining step that the layout area is rectangular, and performing layout processing with reference to the result of the analysis in said analysis step, in a manner such that the material data are laid out in the non-rectangular layout area according to an order of priorities of the material data, when it is determined in said determining step that the layout area is non-rectangular.

20. A data processing method as claimed in claim 19, further comprising a data compiling step of compiling the material data into a data file described in a markup language based on the result of the analysis in said analysis step, and
wherein said layout step comprises performing layout processing using the data file generated in said data compiling step.

21. A data processing method as claimed in claim 19, wherein said data compiling step comprises describing information specifying a storage location where the image data is stored, in the data file, when the material data include image data.

22. A data processing method as claimed in claim 20, wherein the markup language is XML.

23. A data processing method as claimed in claim 19, further comprising a conversion step of converting print data obtained by the layout processing performed in said layout step into a data format that can be processed by a destination printing apparatus.

24. A data processing method as claimed in claim 19, wherein said receiving step comprises receiving the material data and the layout area data from a user terminal requesting layout processing via a network.

25. A program for executing a data processing method of performing layout processing on input data using a computer connected to at least one printing apparatus, comprising:
an input module for inputting data;
an analysis module for analyzing the input data;
a generating module for generating layout information on the data based on a result of the analysis by said analysis module; and
a converting module for laying out the data based on the generated layout information and converting the data laid out into a document printable by the printing apparatus.

26. A program for executing a data processing method, comprising:
a receiving module for receiving material data to be laid out, and layout area data defining a layout area;
an analysis module for analyzing at least one of a type and a shape of each of the material data received by said receiving module;
a determining module for determining whether the layout area defined by the layout area data received by said receiving module is rectangular or non-rectangular; and
a layout module for performing layout processing with reference to a result of the analysis by said analysis module, in a manner such that the material data are accommodated in the rectangular layout area, when it is determined by said determining module that the layout area is rectangular, and performing layout processing with reference to the result of the analysis by said analysis module, in a manner such that the material data are laid out in the non-rectangular layout area according to an order of priorities of the material data, when it is determined by said determining module that the layout area is non-rectangular.

27. A computer-readable storage medium storing a program for executing a data processing method of performing layout processing on input data using a computer connected to at least one printing apparatus, the program comprising:
an input module for inputting data;
an analysis module for analyzing the input data;
a generating module for generating layout information on the data based on a result of the analysis by said analysis module; and
a converting module for laying out the data based on the generated layout information and converting the data laid out into a document printable by the printing apparatus.

28. A computer-readable storage medium storing a program for executing a data processing method, the program comprising:
a receiving module for receiving material data to be laid out, and layout area data defining a layout area;
an analysis module for analyzing at least one of a type and a shape of each of the material data received by said receiving module;
a determining module for determining whether the layout area defined by the layout area data received by said receiving module is rectangular or non-rectangular; and
a layout module for performing layout processing with reference to a result of the analysis by said analysis module, in a manner such that the material data are accommodated in the rectangular layout area, when it is determined by said determining module that the layout area is rectangular, and performing layout processing with reference to the result of the analysis by said analysis module, in a manner such that the material data are laid out in the non-rectangular layout area according to an order of priorities of the material data, when it is determined by said determining module that the layout area is non-rectangular.
